# EUROPEAN PATENT SPECIFICATION

(11) **EP 1 426 158 B1**
(45) Date of publication and mention of the grant of the patent: **25.10.2006**
(21) Application number: 02749356.8
(22) Date of filing: 24.07.2002
(51) Int. Cl.: B29C 39/02, B29C 39/34, B29L 11/00, B29D 11/00

(54) **PROCESS FOR MAKING A SEMI-FINISHED LENS**
VERFAHREN ZUR HERSTELLUNG VON EINER HALBFERTIGE HARZLINSE
PROCEDE POUR LA FABRICATION D'UNE LENTILLE EN RESINE SEMI-FINIE

(30) Priority: 25.07.2001 JP 2001224334
(43) Date of publication of application: 09.06.2004
(73) Proprietor: ASAHI LITE OPTICAL CO., LTD., Fukui-shi, Fukui 910-0004 (JP)
(72) Inventor: KAGEI, Kazunori, Asahi Lite Optical Co., Ltd., Sabae-shi, Fukui 916-0038 (JP); YAMAMOTO, Yoshihiro, Asahi Lite Optical Co., Ltd., Sabae-shi, Fukui 916-0038 (JP)
(74) Representative: Strehl Schübel-Hopf & Partner
(86) International application number: PCT/JP2002/007494
(87) International publication number: WO 2003/009983

(56) References cited:
- WO-A2-96/23651
- JP-A- 2 157 130
- JP-A- 3 284 913
- JP-A- 61 290 012
- JP-A- 2000 039 594

## Description

### TECHNICAL FIELD

The present invention relates to shapes of half-finished resin lenses and to their molding.

### BACKGROUND ART

Many plastic lenses of high-refractivity material are provided for glasses these days. When the refractivity of conventional plastic materials is increased, then thinner lenses may be provided; and when lenses become thinner as a whole, then the amount of the material for one lens may be thereby reduced. However, the costs for developing and producing high-refractivity materials increase in material manufacturers, and the material costs themselves for resin lenses are now increasing. Accordingly, at present, the material cost in the production costs for one lens is now increasing more in lens casting manufacturers.

Resin lenses for glasses now in distribution on the market have a diameter of 80 mm, in accordance with the size of the frames of glasses into which lenses are fitted. Glasses are naturally for correction of eyesight, but their fashionability and function are extremely important for their evaluation. There are now used many kinds of lenses, including, for example, color lenses, photochromic lenses, aspheric lenses, bifocal lenses, etc. Accordingly, lenses having the size as above are now provided so that they may fit to all types of frames of glasses. Given that situation, therefore, lens manufacturers are obliged to fix the diameter of the mold for resin casting into lenses to 80 mm and to keep a large number of molds of various powers in stock, and the number of molds in stock reaches a few thousands. On the other hand, regarding their life, most molds must be re-polished after used (for molding therein) about 100 times, and the maintenance cost of molds is great. In fact, however, a diameter of from 60 to 70 mm will be enough for lenses, when most finished lenses for actual use are taken into consideration. In particular, minus lenses are thick at their edges, and the amount of the resin of the peripheral part to be cut off from conventional minus lenses reaches 10 to 50% of the whole body.

Therefore, when the diameter of lenses is reduced, then the amount of the resin to be used for them may be greatly reduced. However, if lenses originally having a small diameter are produced, small molds are necessary, and if such additional molds are prepared, molds in stock will further increase and the load to lens manufacturers will therefore increase.

The present invention has been made in consideration of the above-mentioned matters, and its object is to provide half-finished resin lenses from which finished lenses of high quality can be obtained at low costs by saving the optical resin for the half-finished resin lenses, and to provide an apparatus and a method for producing them. JP-A-3-284 913, WO-A-96/23651, JP-A-2-157130 and JP-A 61-290012 all disclose making of lenses.

### DISCLOSURE OF THE INVENTION

Given the situation as above, we, the present inventors have assiduously studied to reduce the material cost in production costs for one lens, and, as a result, have found that the object can be attained by utilizing the surface tension of resin in the process of molding lenses. On the basis of this finding, we have completed the present invention, as set out in the claims.

Specifically, the half-finished resin lens of the invention is for producing a desired resin lens from it by cutting its periphery, in which the part to be the lens is positioned in the center area and a thin brim to be cut off is integrally formed at its periphery. The boundary between the part to be the lens and the brim part to be cut off and formed at the periphery has risen owing to the surface tension of the resin.

For example, when a shell is formed by the use of an ordinary mold and when a half of a predetermined amount of resin is cast into the shell set horizontally, and statically left as it is, then a resin pool may be formed nearly in the center part of the mold since the resin at the peripheral part could not be horizontal owing to the surface tension thereof but rises at around it. When this is thermally polymerized as it is, then the resin is cured and its rise becomes relatively gently-sloping, and, as a result, the center part is formed as a lens and this is integrated with a thin brim formed at around the periphery thereof. When the brim part is cut off, then a resin lens having a smaller diameter than the diameter of the mold is obtained.

The molded article in which the lens part is integrated with the thin brim is a pre-molded article for obtaining a lens, and it is a half-finished lens. Heretofore, thick molded articles for lens products of various powers are prepared in stock, and they are cut and polished in the thickness direction thereof in accordance with the demand, and they are referred to semi-lenses. The half-finished lenses as referred to in the present invention are differentiated from such semi-lenses. Concretely, the former shall be so positioned as half-finished resin lenses from which the peripheral brim part is cut off to give regular lenses. Regarding its shape, the half-finished resin lens of the invention is characterized in that a thin brim to be cut off is formed at the peripheral part of the lens body that is nearly in the center part of the half-finished resin lens, and the boundary between the two parts rises owing to the surface tension of the resin being molded and gives a resin pool.

The apparatus of the invention is for producing the half-finished resin lens, and it comprises a shell with a cavity formed inside it, into which a resin is to be cast, a holding and conveying tool capable of holding and conveying the resin-cast shell almost horizontally, and a thermal polymerization unit capable of thermally polymerizing the resin cast in the shell while the shell is still held almost horizontally.

For example, a female mold and a male mold are sealed up with an adhesive tape at their peripheries, with a predetermined center gap formed therebetween to thereby construct a shell with a cavity formed therein. In this step, it is natural that the optical axes of the two molds are set coaxially, and it is also important that the adhesive tape to be attached to the peripheries of the molds forms an accurate cylindrical form.

Regarding its posture, the shell may be kept either vertically or horizontally when a resin is cast thereinto, but the necessary lowermost amount of the resin must be surely cast into the shell. If short, the diameter of the lens produced will be small. Therefore, it is desirable to use a precision casting tool that makes it possible to accurately cast a resin into the shell. After the resin is poured into the shell, the mold constituting it must be kept horizontally so that the optical axis of the cast resin could be in the vertical direction. For this, the shell holder may be so designed that it has a cylindrical hole corresponding to the adhesive tape that is cylindrically wound up around the shell to seal it up therewith. However, the side wall of the hole is not always entirely necessary but a part of the side wall and the bottom of the holed tool may be omitted for ensuring uniform thermal conduction throughout the shell.

If the shell is heated for polymerization while it is inclined, then the center of the lens produced will be shifted and a lens having a predetermined diameter could not be produced. Accordingly, in order to set a large number of shells in a thermal polymerization unit, it is desirable to prepare a holding and conveying tool capable of almost horizontally holding shells therein and a pallet with a large number of holes for shells, and the thermal polymerization unit is preferably equipped with a pallet-holding tool or structure that has the function of horizontally holding the pallet in the unit. The shells may have various postures in the process of producing lenses therein, but they are preferably kept as horizontal as possible for stabilizing the shape of the resin pool in each shell. At least for a predetermined period of time after the sells are set in a thermal polymerization unit but before they are heated at a temperature not lower than room temperature, the shells must be kept horizontally.

In one embodiment of the apparatus of the invention, a ring member may be disposed at around the periphery of the cavity of the shell, and its thickness is smaller than the height of the cavity therefore giving a space in the upper part of the cavity. For example, when half-finished resin lenses having a relatively large radius are produced or when a resin having a relatively low viscosity is used in the invention, the ring member is favorable for producing the desired half-finished lenses with ease.

The method of the invention is for producing the above-mentioned half-finished lenses, which comprises casting a resin into the cavity of a shell with from 10 to 50% of the cavity left empty, and keeping the shell almost horizontally and in which the shell is heated at a temperature not lower than room temperature preferably after the flowability of the resin therein begins to reduce.

When a resin is cast into the cavity of a shell, its amount is metered and a predetermined amount thereof is cast into it so that it may fill from 50 to 90% of the cavity, and therefore, a significant empty space is left in the cavity as it is. The amount of the resin to be cast into the cavity is determined depending on the diameter of the lens to be produced. When the shell is held almost horizontally, then a resin pool may be formed at the center of the cavity therein. Since the resin contains a catalyst for promoting polymerization, its flowability may reduce even when it is left at room temperature and the shape of the resin pool may become stable. For further reducing the amount of the resin to be used in the invention, the resin in the shell in this stage is heated up to a temperature not lower than room temperature. With the thermal polymerization of the resin going on further, the viscosity of the resin pool once lowers and the flowability thereof increases, and, as a result, the resin pool may be deformed and may run therearound to spread. However, since the spread part is an unnecessary part, the polymerization condition is preferably so controlled that the spread part is as small as possible.

### BRIEF DESCRIPTION OF THE DRAWINGS

Fig. 1 is a cross-sectional view of a shell not as yet filled with a resin.
Fig. 2 is a cross-sectional view of the shell provided with a resin to form a resin pool therein.
Fig. 3 is a cross-sectional view of another example of a shell filled with a resin to from a resin pool therein.
Fig. 4 is a cross-sectional view of a half-finished resin lens of the invention.
Fig. 5 is a cross-sectional view of a half-finished resin lens of the invention, for which the resin amount is varied.
Fig. 6 is a cross-sectional view of a half-finished resin lens of the invention, for which the polymerization condition is varied.
Fig. 7 (a) to Fig. 7 (c) are cross-sectional views to show another embodiment of the invention.
Fig. 8(a) to Fig. 8(e) are perspective views to show a production process of the invention.
Fig. 9 is a perspective view to show a holding and conveying tool and a tool for holding it in a thermal polymerization unit.

### [Description of Reference Numerals]

- 1: Female Mold
- 2: Male Mold
- 3: Adhesive Tape
- 4: Cavity
- 4a, 4b: Periphery of Cavity
- 5: Shell
- 6: Resin-Casting Syringe
- 7a, 7b: Resin pool
- 8a, 8b, 8c, 8d: Molded Article (Half-Finished Resin Lens)
- 9a, 9b, 9c: Lens Part
- 10a, 10b, 10c, 10d: Brim
- 11a, 11b: Rise
- 12: Ring Member
- 14: Holding and Conveying Tool
- 15: Hole
- 16: Claw
- 18: Rack

### BEST MODES OF CARRYING OUT THE INVENTION

Embodiments of the invention are described hereinunder with reference to the Table and the Drawings given herein.

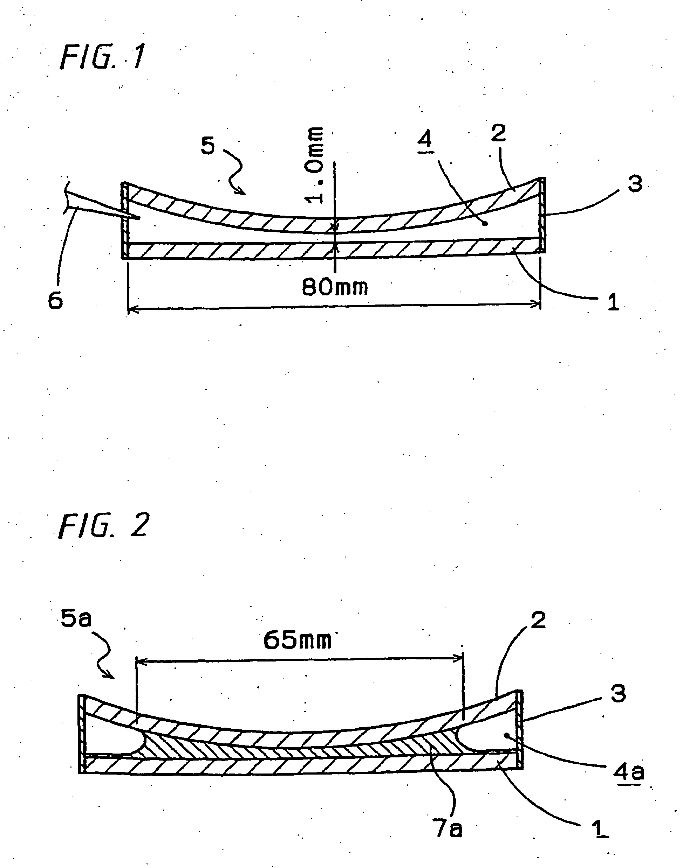

As in Fig. 1, a female glass mold 1 having a diameter of 80 mm and having a radius of curvature on its concave face of 1480 mm, and a male mold having a diameter of 80 mm and having a radius of curvature of 113.8 mm were coaxially disposed with the center gap therebetween being 1.0 mm, and sealed up with an adhesive tape 3 at their peripheries to construct a shell 5 with a cavity 4 formed therein. Two shells were constructed in the same manner. A resin material to be cast into the cavity 4 was prepared, comprising the components mentioned below. The monomers were from Mitsui Chemical.

| | |
|---|---|
| Thioepisulfide monomer | 90.0 parts (by weight) |
| Thiol monomers | 10.0 parts |
| N,N-dimethylcyclohexylamine | 0.04 parts |
| N,N-dicyclohexylmethylamine | 0.10 parts |
| Acetic anhydride | 0.08 parts |
| Seesorb 704 | 3.0 parts |

The above components were stirred and mixed, then filtered and defoamed to prepare a casting resin. The viscosity of the resin was 42 cps.

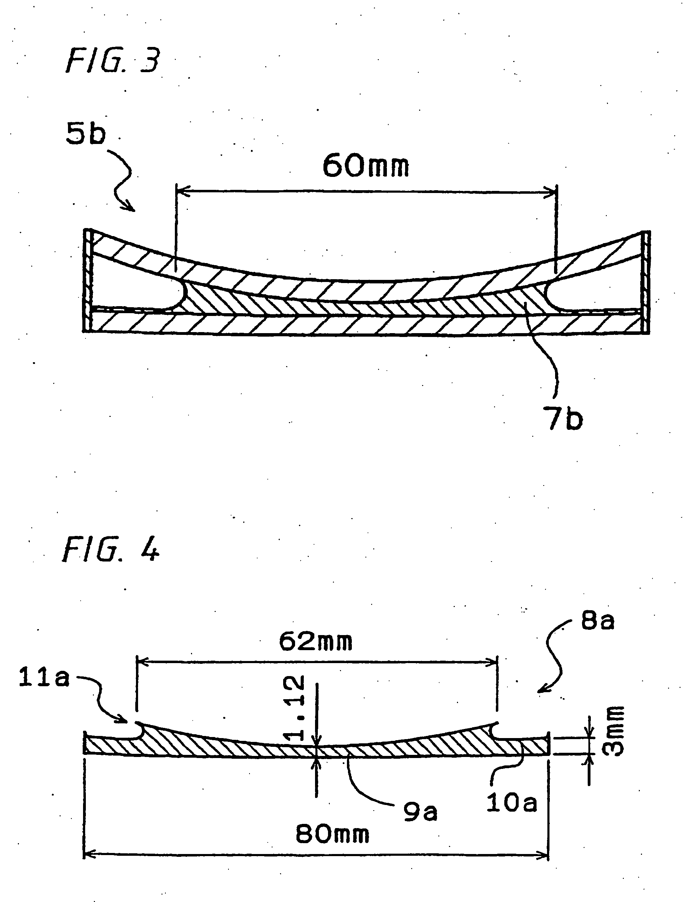

One shell 5a of the shells 5 constructed above was laid horizontally, and the resin prepared as above was cast into it toward the center of its cavity via a casting syringe 6 piercing through the adhesive tape, as in Fig. 1. The resin gradually expanded while kept circular in the part around the center of the cavity having a gap of 1.0 mm, and casting the resin was further continued until it formed a columnar resin pool having a diameter of 65 mm, and the resin pool 7a was thus formed. The periphery of the resin pool rose owing to the surface tension of the resin. In that condition, the resin could not as yet fill up the periphery 4a of the cavity, and it spread in the mold 1 to form a thin layer. In the same manner, the resin was cast into the other shell 5b toward the center of the cavity thereof until it formed a columnar resin pool 7b having a diameter of 60 mm, as in Fig. 3. Two shells 5a and 5b were put horizontally in an electric furnace, and heated therein at 40°C for 1 hour and then at 90°C for 4 hours to complete the polymerization.

After the polymerization, the shell 5a was split to remove the mold. As in Fig. 4, the molded article 8a had a lens part 9a at its center, and had a thin brim 10a at its periphery. In this, the brim 10a was integrated with the lens part, and had a thickness of 3 mm and a diameter of 80 mm. In the lens part, the convex face of the glass mold having a radius of curvature of 113.8 mm was transferred onto the concave face of the lens, and a rise 11a was formed at the peripheral part of the lens having a diameter of 62 mm. The power of the lens part was -6.00 D, and the center thickness thereof was 1.12 mm. The molded article 8a is referred to as "test lens 1", and shown in Table 1.

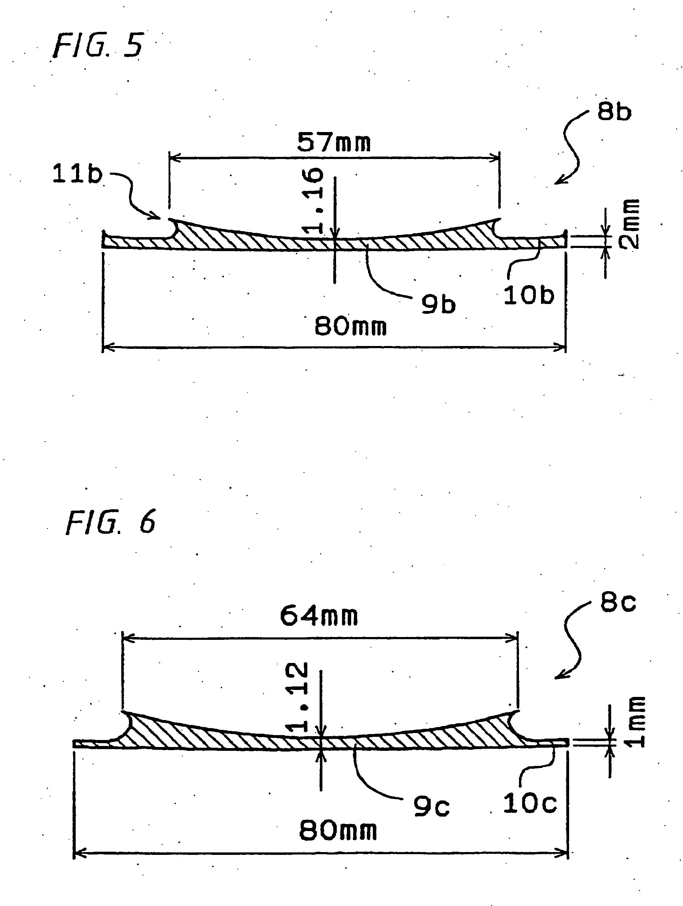

The molded article 8b obtained from the other shell 5b is shown in Fig. 5. It had a lens part 9b at its center, and had a thin brim 10b at its periphery. In this, the brim 10b was integrated with the lens part, and had a thickness of 2 mm and a diameter of 80 mm. On the concave face of the lens part 9b, transferred was the convex face of the glass mold having a radius of curvature of 113.8 mm, and a circular rise 11b was formed at the peripheral part of the lens having a diameter of 57 mm. The power of the lens part 9b was -6.00 D, and the center thickness thereof was 1.16 mm. The molded article 8b is referred to as "test lens 2", and shown in Table 1.

From these results, it is understood that the resin having been originally cast into the shell formed a columnar resin pool 7a and 7b in the center of the cavity of the shell while only a thin resin layer was formed at the periphery of the cavity. At least in the molded articles, however, the convex face of the lens part was finished to have the same diameter, 80 mm as that of the mold. Therefore, it may be considered as follows: The shell was heated in the initial stage of thermal polymerization, and therefore the resin in the shell was also heated at the same time whereby the resin viscosity temporarily lowered, and as a result, the columnar resin pool in the center part of the cavity was deformed, and the resin would have flowed toward the periphery of the cavity. In that situation, if it is desired to reduce the resin flow toward the periphery of the cavity, the following two will be effective though indiscriminately acceptable since resins have their own optimum viscosity: One is to increase the viscosity of the resin to be cast into the shell cavity, within the range not interfering with its polymerization molding into lenses; and the other is to set the initial polymerization temperature at room temperature or a temperature lower than room temperature, and after the viscosity of the resin in the shell is increased by the polymerization thereof, the resin is further polymerized under heat. Though the original center gap of the cavity was set at 1.0 mm, the lens actually molded was relatively thick. This will be because the resin contraction area that might have some influence on the mold would be small and, in particular, the resin volume was not large everywhere in the cavity, and, in addition, air existing in the empty space of the cavity would have expanded.

The data of the test lenses fabricated in this Example are shown below. The data of the comparative lenses of -6.00 D were produced in an ordinary manner.

**[Table 1]**

| Lens Sample | Lens Center Thickness (cm) | Lens Weight (g) |
|---|---|---|
| Ordinary -6.00 D Lens (1) | 1.06 | 29.86 |
| (2) | 0.99 | 29.26 |
| (3) | 1.07 | 29.72 |
| (4) | 1.09 | 29.75 |
| (5) | 1.03 | 29.53 |
| (6) | 1.03 | 29.48 |
| (7) | 1.08 | 29.88 |
| (8) | 1.05 | 29.68 |
| (9) | 1.05 | 29.58 |
| Average of (1) to (9) | 1.05 | 29.638 |
| Test Lens 1 | 1.12 | 20.73 |
| Test Lens 2 | 1.16 | 16.36 |

As in the above Table, test lens 1 is a little thicker at its center, as compared with the ordinary -6.00 D lenses, but is lighter by about 32%. Similarly, test lens 2 is also thicker at its center, as compared with the ordinary lenses, but is lighter by about 45%. Accordingly, even though full-size lenses having a diameter of 80 mm are not produced by the use of glass molds having a diameter of 80 mm, lenses having a desired diameter may be produced according to the method as above and the material cost of the lenses can be reduced by at least 30% not changing at all the properties of the lenses.

As so mentioned hereinabove, it is considered that, since the resin was, immediately after cast into the shell, thermally polymerized therein, its surface tension lowered in the shell and, as a result, the resin would have flowed away from the resin pool. Therefore, the same shell as the shell 5a in Fig. 2 was prepared, and immediately after the resin was cast thereinto, it was not heated but the shell was kept horizontally so as to age the resin therein. After about 2 hours, the resin was thermally polymerized, and it gave a molded article 8c as in Fig. 6. The brim 10c of the molded article 8c was extremely thin and was from about 1 mm to less than 1 mm. This is presumed as follows: When cast into the shell, the resin was at about 17°C, but its temperature increased while the shell was kept at room temperature of from 20 to 24°C. Since it contained a catalyst, the resin polymerization went on to increase the viscosity of the resin, and the resin became poorly flowable. With that, the shape of the resin pool could be stabilized. After the start of the thermal polymerization thereof, the viscosity of the resin once lowered, and the resin would have flowed away in some degree. However, the resin was cured and, as a result, it would not have deformed so much. Accordingly, the diameter of the lens part was 64 mm, and the original resin pool was cured almost as it was in the original condition. In this Example, the female mold used had a radius of curvature on its concave face of 1480 mm, or that is, it was almost flat within its range having a diameter of 80 mm, and the resin could readily spread on the face of the mold. Accordingly, when a mold having a smaller radius of curvature than the illustrated case is used, then the thickness and the diameter of the brim could be much smaller.

When the shell is stood vertically and a resin is cast thereinto in that condition, then it takes at least from 30 minutes to 1 hour after the shell is turned horizontally and kept as such and before the resin pool is completely formed therein. After the resin in the shell is kept at room temperature of 20 to 22°C, it further takes about 1 hour before its polymerization goes on owing to the action of the catalyst in the resin and the flowability of the resin pool in the shell is lowered. Accordingly, for the polymerization condition to give the molded article of Fig. 6, the temperature profile is so controlled that the shell could be heated in about 2 hours after casting the resin into the shell. Under the polymerization condition, the resin to be wasted may be reduced as much as possible.

The above molded articles 8a, 8b and 8c all have their lens part at their center, but have the brim that is thinner than the lens part, at their periphery. Therefore, it will be unsuitable to refer their overall structure as "lens". In the present invention, the molded articles are referred to as "half-finished resin lenses" and the same reference numerals as those of the molded articles are applied to them.

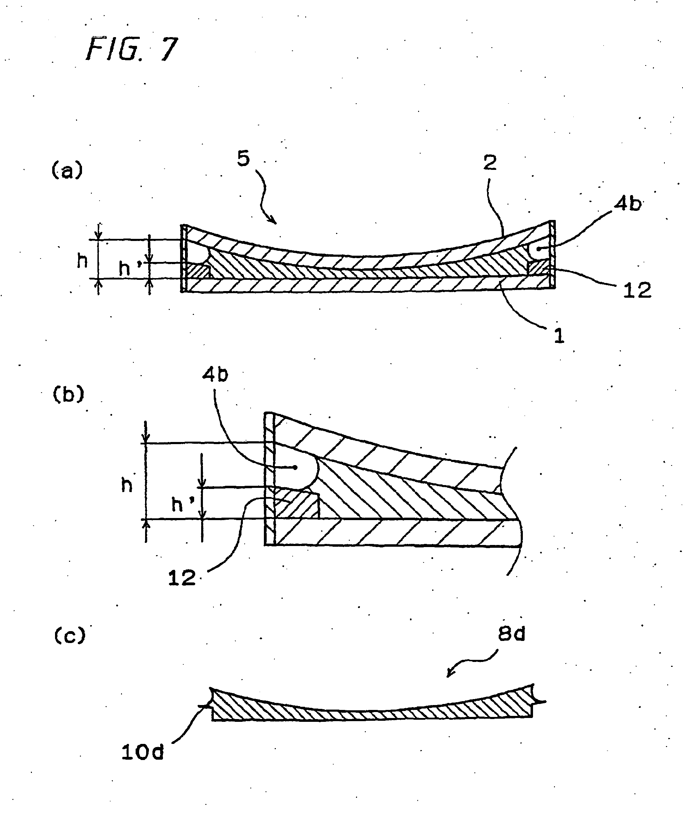

Still another embodiment of the invention is described with reference to Fig. 7. In this Example, a ring member 12 is disposed at the periphery 4b of the cavity 4 of the shell 5, as in Figs. 7 (a) and (b). The thickness h' of the ring member 12 is smaller than the height h of the cavity, and a space is given above the ring member 12 in the cavity periphery 4b. The resin cast into the cavity rises above the upper face of the ring member 12 owing to its surface tension. The half-finished lens 8d obtained in this Example has a brim 10d that protrudes from the side edge of the lens part at around the center thereof, as in Fig. 7 (c). For example, a case of producing half-finished resin lenses the radius of the lens part of which is relatively large, and a case of using a resin having a relatively low viscosity in which the resin extends too much as its surface tension is poor and desired molded articles could not be produced may be taken into consideration. The problems with such cases may be solved by using the ring member as in this Example. The ring member in this Example is so designed that the height to its top face increases from the center toward the outer edge thereof and the face is therefore inclined a little. However, the shape and the dimension of each part of the ring member are not limited to those illustrated herein, and may be any ones capable of producing a brim owing to the surface tension of the resin. Preferably, the material of the ring member is an easily-releasable one, for which, for example, preferred are polyvinyl chloride, polyethylene ethylene/vinyl acetate copolymer and others that are generally used for gaskets. In this embodiment, when the ring thickness h' is large and is near to the cavity height h, or when the amount of the resin to be cast is small, the brim could not protrude so much. Even in such a case, however, the cross-sectional profile of the brim may be curved, therefore surely enjoying the benefit of the surface tension of the resin. The "brim" as referred to herein includes those in these cases.

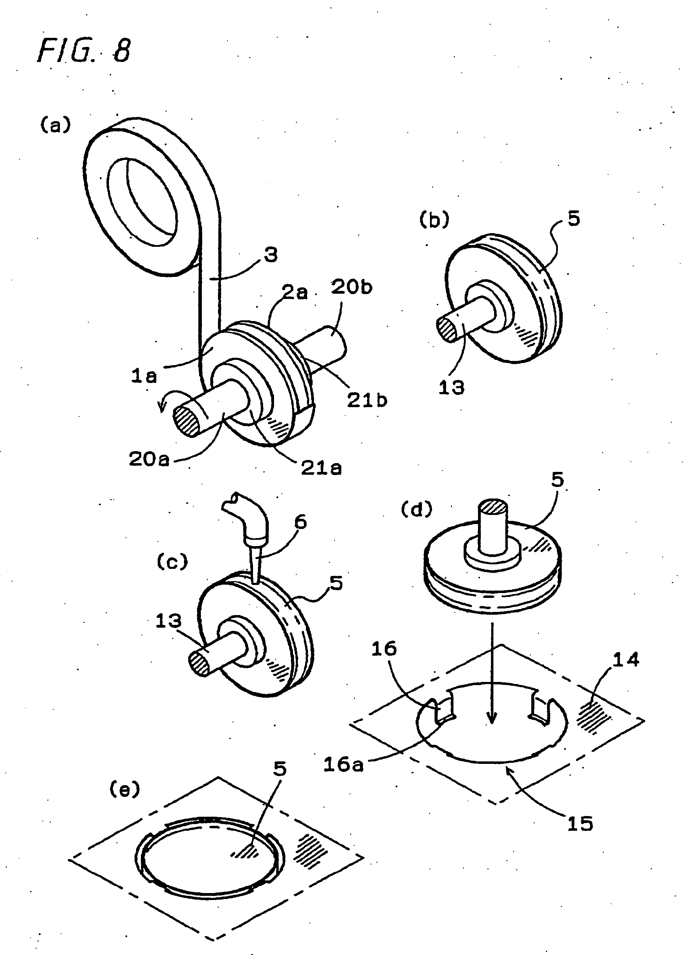

The method and the apparatus of the invention are described with reference to Fig. 8. As in Fig. 8(a), molds 1a and 2a that are selected as prescribed are held by suckers 21a and 21b fitted to rotary driving shafts 20a and 20b, and the center distance between them is adjusted with their optical axes being set coaxially. Then, the molds are sealed up with an adhesive tape 3 applied to their peripheries while their driving shafts are rotated to thereby finish a shell 5 as in Fig. 8 (b). The shell 5 may be conveyed in any desired manner by the robot hand 13 attached thereto. Next, as in Fig. 8(c), a syringe 6 is stuck into the shell 5 that is held vertically, and a predetermined amount of resin is metered with it and cast into the shell. The amount of the resin to be cast is from 50 to 90% of the cavity volume of the shell. The part from which the syringe has pulled out is sealed up with a piece of the adhesive tape so that no resin may leak out. Fig. 8(d) shows the shell that is inserted into the hole 15 of a holding and conveying tool 14. The holding and conveying tool is kept horizontally, and the hole 15 is provided with four claws 16 that are accurately brought into contact with the face of the adhesive tape of the shell. The adhesive tape face is vertically led to the hole along the claws, and the tip 16a of each claw acts to keep the mold on the same level and the shell is thereby held horizontally. Fig. 8 (e) shows the shell 5 inserted in the holding and conveying tool.

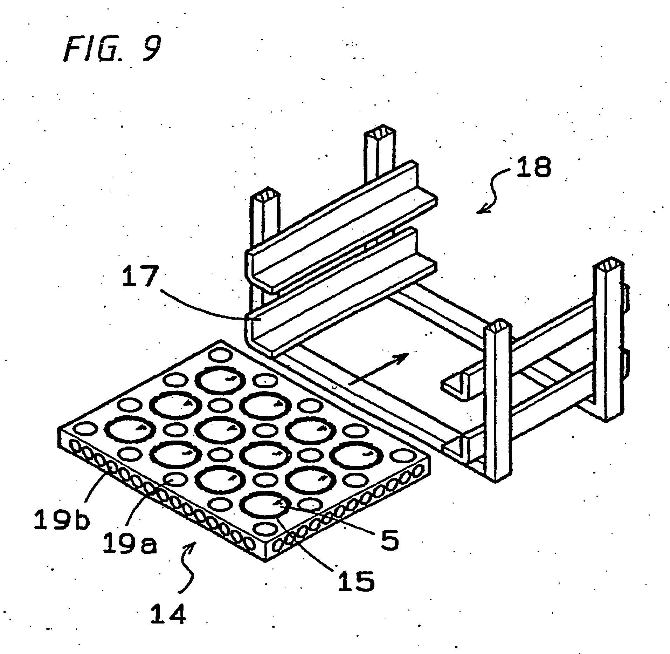

As shown in Fig. 9, the holding and conveying tool 14 has a large number of holes 15 formed therein, and the shell 5 is inserted in each hole. 19a and 19b are air holes that enable ventilation in the step of thermal polymerization of resin. Inside the thermal polymerization unit, a rack 18 is provided as one example of a holding device of horizontally holding the shells, and a plurality of rails 17 are horizontally disposed in it. The holding and conveying tool 14 is horizontally set in the rack. When the rack is not used, rails may be fitted to the inner wall of the thermal polymerization unit.

### INDUSTRIAL APPLICABILITY

According to the present invention, molds having a diameter of 80 mm that are generally used in molding resin lenses may be used to fabricate half-finished lenses having any desired diameter but smaller than the outer diameter of the molds. Any superfluous material is not used and the polymerization time may be shortened, and therefore the production costs of lenses may be reduced in the invention. Accordingly, the invention makes it possible to provide high-quality resin lenses to users at lower costs. In addition, the invention may provide a factor of changing the conventional distribution system, for example, providing a possibility that the work of producing lenses and the work of fitting lenses into frames of glasses may be carried out in one and the same place.

## Claims

1. A method for producing a half-finished resin lens, which comprises:
casting a resin into the cavity of a shell with from 10 to 50% of the cavity left empty,
holding the shell almost horizontally, and forming a resin pool that has risen at the center of the cavity owing to the surface tension of the resin, and
heating the resin at a temperature not lower than room temperature,
thereby producing a half-finished resin lens in which a part to be a lens is positioned in the center and a thin brim to be cut off is integrally formed at the periphery thereof.

2. The method for producing a half-finished resin lens according to claim 1, which is further employing a ring member at around the periphery of the cavity of the shell, and in which since its thickness is smaller than the height of the cavity, the ring member gives a space in the upper part of the cavity.

## Patentansprüche

1. Verfahren zum Herstellen einer halbfertigen Kunstharzlinse, umfassend
Gießen eines Kunstharzes in das Nest einer Schale, wobei 10 bis 50 % des Nests leergelassen werden,
fast waagerechtes Halten der Schale und Bilden eines Kunstharzbeckens, das in der Mitte des Nests aufgrund der Oberflächenspannung des Kunstharzes angestiegen ist, und
Erhitzen des Kunstharzes bei einer Temperatur, die nicht kleiner als die Raumtemperatur ist,
**dadurch** Erzeugen einer halbfertigen Kunstharzlinse, bei der ein Teil, der eine Linse darstellen soll, in der Mitte angeordnet ist und ein dünner Rand, der abgeschnitten werden soll, einstückig an dessen Rand ausgebildet ist.

2. Verfahren zum Herstellen einer halbfertigen Kunstharzlinse nach Anspruch 1, bei dem ferner ein Ringelement um den Außenrand des Nests der Schale herum eingesetzt wird und bei dem das Ringelement, da seine Dicke kleiner als die Höhe des Nests ist, einen Zwischenraum im oberen Teil des Nests erzeugt.

## Revendications

1. Procédé pour produire une lentille en résine semi-finie, qui comprend les étapes consistant à :
couler une résine dans la cavité d'une coupelle, de 10 à 50 % de la cavité étant laissé vide,
maintenir la coupelle presque horizontalement, et former un bassin de résine qui s'est élevé au centre de la cavité en raison de la tension superficielle de la résine, et
chauffer la résine à une température non inférieure à la température ambiante,
en produisant ainsi une lentille en résine semi-finie dans laquelle une partie devant être une lentille est positionnée au centre et un bord fin devant être coupé est formé d'un seul tenant à sa périphérie.

2. Procédé pour produire une lentille en résine semi-finie selon la revendication 1, qui emploie en outre un élément annulaire autour de la périphérie de la cavité de la coupelle, et dans lequel puisque son épaisseur est plus petite que la hauteur de la cavité, l'élément annulaire laisse un espace dans la partie supérieure de la cavité.
